# EUROPEAN PATENT APPLICATION

(11) **EP 1 698 594 A1**
(43) Date of publication of application: **06.09.2006**
(21) Application number: 06447032.1
(22) Date of filing: 06.03.2006
(51) Int. Cl.: C02F 1/467, C02F 1/46

(54) **Method for removing pollutants from water based fluids**

(30) Priority: 04.03.2005 EP 05447047
(71) Applicant: Ecodis, 2900 Schoten (BE)
(72) Inventor: Peters, Elmar, 2900 Schoten (BE)
(74) Representative: Luys, Marie-José A.H.

(57) **Abstract**

This invention relates to a method and a device for removing pollutants form at least one water based fluid. Thereto the water based fluid contains an amount of at least one chloride mineral and is subjected to an electrolysis in the presence of an anode and a cathode, at an effective current level with the purpose of generating from the water and/or the chloride mineral compounds containing at least one oxygen and/or chlorine radical, which are capable of reacting with the organic pollutant and of decomposing the pollutant to give purified water based fluid, wherein the anode and cathode comprise at least one metal which is at least partly coated with at least one layer containing at least one metal oxide.

## Description

The present invention relates to a method for removing organic pollutants from water based fluids, in particular water. The invention in particular relates to a method for removing endocrine disrupting compounds (hereinafter referred to as EDC) from water.

The fate of endocrine disrupting compounds (EDCs) and particularly estrogens in the environment has been investigated, after the discovery of feminization of male fish and other aquatic organisms exposed to wastewater treatment plant (WWTP) effluents had been reported (see for instance Purdom et al., Estrogenic effects of effluents from sewage treatment works, Chem Ecol 8, 275-285, 1994). Biological activity of natural estrogens is usually observed at individual concentrations as low as 0.1 - 10 ng estradiol-equivalents per liter of water. Individual concentrations of natural estrogens encountered in WWTP influents have been found to amount to approximately 0.1 - 100 ng/L. WWTP effluents leaving the water purification station often still contain up to 50 ng/L, whereas rivers may contain up to 5 ng/L of natural estrogens. The presence of such EDC in water poses serious environmental problems. Especially ethinylestradiol (EE2) has been pinpointed as the most important contributor to estrogenic activity in environmental samples (see for instance Johnson and Sumpter, Removal or endocrine-disrupting chemicals in activated sludge treatment works, Environ Sci Technol 35 (24), 4697-4703, 2001).

Whereras the environmental fate of estrogens in WWTPs and receiving water bodies has been characterized, no micro-organisms capable of causing biodegradation of the estrogens to environmentally acceptable concentrations, have yet been identified. For that reason alternative degradation strategies have been explored.

A known alternative degradation strategy of estrogens in water is based on chlorination using NaOCI. However, reaction products of estrogens formed during this chlorination have potential estrogenic and persistent characteristics (see for instance Moriyama et al., Identification and behaviour of reaction products formed by chlorination of ethinylestradiol Chemosphere 55, 839-847, 2004; Lee et al., Effects of chlorine on the decrease of estrogenic chemicals, Water Res 38, 733-739, 2004; Hu et al., Products of aqueous chlorination of 17α-estradiol and their estrogenic activities, Environ Sci Technol 37 (24), 5665-5670, 2003). The efficiency of the method has been found to be pH dependent, with the effect that at a pH of 7.4, which corresponds to the pH of water in the water distribution system, the efficiency of the process drops with approximately 50%. Furthermore, temperature dependency has been observed as well, as the pH increases with increasing temperature. Besides that, the presence of ammonium involves formation of chloro-amines, which are less reactive than free chlorine. Nowadays, chlorine treatment is the most commonly used disinfection method, as it is suitable for both primary disinfection of wastewater as well as for disinfecting residual infection of tap water before it is put available to the end user.

Other techniques for removing estrogens from wastewater involves subjecting WWTP effluents to additional treatment steps, for example activated carbon or ozone treatment or ultraviolet (UV) photolysis, which affects viral DNA and in that way hampers viral replication. These techniques are however only suitable for use in the continuous mode and they represent a considerable cost when applied to large volumes of wastewater streams. (Johnson & Sumpter, Removal or endocrine-disrupting chemicals in activated sludge treatment works, Environ Sci Technol 35 (24), 4697-4703, 2001; Yoon et al., HPLC-fluorescence detection and adsorption of bisphenol A, 17b-estradiol, and 17a-ethinylestradiol on powdered activated carbon, Water Res 37, 3530-3537, 2003; Huber et at., Oxidation of pharmaceuticals during ozonation and advanced oxidation processes, Environ Sci Technol 37, 1016-1024, 2003; Ternes et al., Ozonation: a tool for removal of pharmaceuticals, contrast media and musk fragrances from wastewater, Water Res 37, 1976-1982, 2003). Besides that, UV irradiation only provides direct disinfection to the water flow that has been subjected to irradiation. As a consequence, the whole water flow needs to be treated and any biofilm present in the system subsequent to the UV irradiation source is not affected because no residual reactivity is provided.

There is thus a need to a process with which the concentration of organic pollutants, in particular estrogenic disrupting compounds in fluids, may be reduced to an acceptable level. With fluids is meant water based fluids, in particular water.

The aim of the present invention is therefore to provide a method for removing pollutants, in particular EDC, from water based fluids, with improved removal efficiency as compared to the methods known from the state of the art. It is a particular object of this invention to provide a method capable of removing pollutants to an environmentally acceptable level from a water based fluid flow, in particular a water flow. It is a particular object of this invention to provide a method which is suitable for use with both small and large water flows, discontinuous or continuous water flows.

This object is achieved by a method showing the technical features of the characterising portion of the first claim.

Thereto the method of this invention is characterised in that the water based fluid contains an amount of at least one chloride mineral and is subjected to an electrolysis in the presence of an anode and a cathode, at an effective current level with the purpose of generating from the water and/or the chloride mineral compounds containing at least one oxygen and/or chlorine radical, which are capable of reacting with the organic pollutant and of decomposing the pollutant to give purified water based fluid, wherein the anode and cathode comprise at least one metal which is at least partly coated with at least one layer containing at least one metal oxide..

The inventors have found that with the method of this invention endocrine disrupting compounds may be decomposed. The inventors have for example found that removal efficiencies of ethinylestradiol (EE2) from the effluent of a membrane bioreactor (MBR) treating hospital sewage and from drink water at dosed concentrations of about 1 mg EE2/liter, amount to 98%.

The inventors have found that besides EDC, other organic and inorganic compounds or pollutants present in the fluid flow as well as micro-organisms, in particular those which may be oxidised, may be decomposed as well. The inventors have for example found that ammonium is oxidised to give nitrate. Thus, the method of this invention is not limited to the removal of EDC per se, but includes removal of other organic and inorganic pollutants and micro-organisms.

Although the use of electrolysis for removing phenols from and lowering the chemical oxygen demand (COD) of high strength industrial wastewaters is known from the art, thus far, electrolysis of the effluent of WWTP as a polishing step aimed at the removal of organic polluents, in particular EDC, more in particular ethinylestradiol from water, has not yet been described (see for instance Körbahti, & Tanyolaç, Continuous electrochemical treatment of phenolic wastewater in a tubular reactor, Water Res 37 (7), 1505-1514, 2003). Electrolysis of these high strength industrial wastewaters is mostly carried out using different electrode materials, amongst which titanium oxide, ruthenium oxide, boron doped diamond electrodes.

The method of this invention presents the advantage that when applied to tap or drink water as distributed and even water from sources present in nature, the water as such contains the necessary compounds which generate the radicals that are reactive with the pollutants and micro-organisms present in the water. Thus no compounds foreign to the system need to be added and the homogeneity of the water is maintained. The inventors have identified that in the method of the present invention, compounds containing O and/or CI radicals are generated from the compounds present in the fluid to be treated, and that these radicals are reactive with the pollutants in such a way that the pollutants are decomposed.

The inventors have surprisingly found that with the method of this invention, the radicals are not only reactive with the organic and inorganic compounds, but also with micro-organisms present in the water based fluid. Thus, the water based fluid is not only purified of organic and inorganic pollutants but is also disinfected of micro-organisms present in it. Killing of the micro-organisms present in the flow that is subjected to the electrolysis, has the effect that biofilm formation in parts downstream of the electrolysis treatment unit by these micro-organisms is counteracted.

The inventors have further surprisingly found that compounds containing O and/or Cl radicals give rise to formation of a.o. HOCL and OCI-, which provide a residual and continued oxidation and disinfection activity to the fluid, even after it has left the electrolysis cell. This continued activity is important as the fluid usually has to flow through a distribution system which may contain a subsequent biofilm comprising micro-organisms as well. The inventors have now found that micro-organisms present in this subsequent biofilm may be released from it, end up in the disinfected fluid flow and be decomposed by the residual activity remaining in the flow. The inventors have also found that the compounds which are responsible for the residual reactivity, are capable of penetrating the biofilm, of killing the micro-organisms present in it and in a later stage of even physically disintegrating the biofilm. Physical disintegration of the biofilm usually requires a longer period of time. The effect however is that in the situation where no biofilm remains, arriving micro-organisms will not find a biofilm in which they can settle and reproduce so that the risk to re-infection by incoming micro-organisms may be minimised.

The presence of the residual reactivity is an important advantage as it provides the possibility of subjecting a limited fluid flow to the electrolysis of this invention, and of thereafter mixing this flow with an amount of an untreated flow, to obtain purification from pollutants and disinfection of the untreated flow part as well.

This present invention provides a big advantages over methods based on an intermittent or periodic disinfection, where a partial disintegration of the biofilm may be accomplished, but where the components remaining from the dead biofilm function as nutrients for the micro-organisms that were not killed as well as for the new incoming micro-organisms, and thus give rise to re-formation of biofilm.

The water based fluid used in the present invention is preferably water. More preferably use is made of water that has been subjected to a water purification treatment and as such contains chlorides. Drinkwater as supplied may for example contain up to 100 mg/I of chlorides. So usually the water can be used as such, there is no need to supply additional chlorides. Nevertheless, in case the chloride concentration in the water is lower than 2 mg/l as is for example the case for rain water, additional chloride minerals may be supplied. Thereby care will be taken to supply such chloride mineral concentrations as permitted by local legislation. As the method of this invention functions is based on the used of compounds which are commonly present in water, no foreign compounds need to be added. In that way the risk to unwanted local over-concentration of disinfectants may be avoided.

Chloride concentrations of less than 5 mg/ liter, often about 2 or even only 1 mg/liter will usually be sufficient to achieve the desired purification and disinfection degree.

Within the framework of this invention any chloride minerals may be suitably used. Examples of suitable compounds include chlorides of sodium, calcium, potassium, magnesium, iron, etc although the use of sodium chloride is preferred as it is naturally present in most waters and certainly in drink water supplied through the water distribution system.

Within the scope of the present invention preferably use is made of an electrode having a substrate of at least one precious metal, which is coated with at least one layer containing at least one precious metal oxide. These electrodes provide optimum generation of the above described radicals, in the optimum ratios.

The substrate for the electrode is preferably made of metallic titanium. The at least one precious metal oxide is preferably selected from the group of Ti, Pt, Pd, Ir, Ru and Ta oxide. However, the titanium substrate may also be coated with a mixture of two or more of those oxides. The metal oxides are preferably applied in a plurality of layers one on top of the other. Those electrodes are generally known to the person skilled in the art. It is further preferred that consecutive metal oxide layers have a composition which is virtually the same, as this optimises the electric potential difference between the anode and cathode in such a way that generation of the desired radicals is promoted over formation of other radicals, such as for example CI radicals which appears to have a lower stabiliy and to involve a less efficient degradation of the biofilm.

Radical formation may be optimised by using electrodes in which the at least one metal oxide layer is porous, as this increases the contact surface area.

The efficiency of the method of this invention appears to be hardly pH dependent, at least in the pH region of between 6 and 8.5, particularly between 6.5 and 8.5. Publicly distributed tap water often has a pH of between 7.4 and 8.2. Therefore, the method of this invention is preferably operated in the afore-mentioned pH ranges. Above a pH of 8.5, the concentration of the more active HOCI drops to low levels, which goes at the expense of the efficiency of the residual disinfection and oxidative effect.

Preferably the electrolytic cell is operated using a direct current source. Preferably the direct current source is adapted to change the level of current depending on the required radical concentration. Preferably use is made of a switched power supply, as this provides maximum efficiency. The risk to calciumcarbonate deposition is minimised by inverting the polarisation of the electrodes at regular time intervals.

The level of current used in the method of the invention may be selected within broad ranges and will usually be adapted by the person skilled in the art to the prevailing conditions, in particular the water flow rate, and the parameters of the water to be treated, for example the chloride concentration. In industrial practice suitable effective levels of current could be between about 0-100 A, although higher levels may be needed under particular circumstances. Energy consumption typically amounts to 3-10 A and 3-25 V per m³/h of water often to about 6A and 7V per m³ of treated water. However, the current may be increased if a higher disinfection level is required.

Within the framework of this invention, the method may be operated as a continuous or flow through process, where the whole fluid flow is flown through the electrolysis reactor once. The method may also be operated in a so-called recirculation mode, where a part of or the entire fluid flow is repeatedly circulated to and through the electrolysis reactor and withdrawn from the circuit when and at the position where water or fluid is taken from the circuit. It is also possible to operate the method batch wise and to apply a current to the electrolytic cell only in case water flow is requested. It is also possible to apply the method batch wise at such current levels that an intensive disinfection is carried out during a predetermined period, whereby radical generation and residual reactivity is periodically set at higher levels than normally permitted, to provide an instantaneous and intensive disinfection.

Within the framework of this invention, it is also possible to mix an amount of water that has been treated as described above, with a second water flow. Because the treated flow has residual reactivity and contains compounds reactive with pollutants and micro-organisms present in the second flow, the second flow will be purified thereof as well. This may for example be achieved by subjecting a bypass of the fluid flow to the above-described purification method.

The invention also relates to a device for carrying out the above described method.

Thereto, the device of this invention comprises a reactor with
- an inlet for an amount of water based fluid to be treated,
- at least one anode and cathode comprising at least one precious metal substrate which is coated with at least one layer containing at least one metal oxide,
- means for supplying to the said anode and cathode an effective current level with the purpose of generating in the fluid compounds containing oxygen and/or chlorine radicals which are reactive with the pollutants and micro-organisms present, and
- an outlet for withdrawing the purified fluid from the reactor after it has been subjected to electrolysis.

If so desired, the reactor may be mounted in a bypass to a primary water flow. In that case the device preferably comprises a main flow for supplying the water based fluid, which main flow comprises a first connection to a bypass for supplying part of the main flow to the bypass, in that the reactor is mounted to the bypass and is adapted to subject the fluid flow from the bypass to electrolysis, in that the bypass comprises a second connection to the main flow permitting the treated bypass flow to be supplied to non the treated main flow. Because the bypass flow has residual reactivity, pollutants and micro-organisms present in the main flow, will be contacted to compounds reactive therewith and the main flow will be purified of these pollutants and micro-organisms as well. Thereby, care should be taken to treat the bypass in such a way that sufficient residual reactivity is maintained.

Furthermore, the device of this invention may be connected to a control device which permits automatic operation thereof. In particular, the device may contain a first detector for detecting the flow rate of the influent water, the first detector being provided for supplying a control signal to a regulating device, which in turn is provided to adapt the current level to the influent flow rate. If so desired the regulating device may be adapted to control dosing of additional chloride mineral to the influent or the electrolytic cell if enhanced levels of compounds containing chlorine radicals are desired. The device may also be coupled to a second device for measuring the free oxidants present in the main flow subsequent to the reactor or in other words for measuring the residual desinfection level and for supplying a corresponding signal to a regulating device, so that the current and any other parameters may be suitably adapted.

The present invention presents several advantages:
1. it is suitable for the purification of a wide variety of water qualities and waters with varying origins. It is for example suitable for the purification of naturally occurring water for example well water, tap water distributed to the public to provide highly purified water, swimming water, for the purification of effluents originating from waste water treatment plants, which still contain significant amounts of organic pollutants, and for the purification if waste wasters of industrial origin, for example cool towers etc. The present invention therefore relates to a method for purifying the afore-mentioned waters from organic and inorganic pollutants and micro-organisms present therein
2. it is flexible, in the sense that it may be easily adapted to widely varying water flows. The method of the present invention is suitable for treating small water flow rates of for example between 0-500 1/hour, and in that way solves the problem of existing chemical purification methods with which at low water flow rates the chemicals dosing would be in significant excess.
   However, the method of this invention is also suitable for treating large water flow rates in the order of 1-500 m³/hour or more, or any flow rate between 500l/h and 1m³/h. The person skilled in the art will be capable of adapting without undue experimentation, the dimensions of the electrolytic cell, the dimensions of the electrodes and the operation parameters such as the amount of current and the amount of chloride mineral added, to achieve the desired purification levels.
3. The present invention is suitable for removing a wide variety of micro-organisms for example bacteria such as Escherichia Coli and Legionella Pneumophila, fungi, algae, virusses. Therefore, the present invention also relates to a method for removing from water based fluids one or more micro organisms from the group of Bacillus fubeilis, Bacillus cereus, Pneumonas Aeroginosa, Staphylococcus Aureus Escherichia Coli, Ralstonia Solanasearum, Trichoderma Hamatum, Salmonella species spp, Campylobacter Jejuni, Pseudomonas fluorescens, Pantoea agglomeans Tahnella aquatilis.
4. The present invention presents the further advantage that the local disinfection occurring in the electrolytic cell, extends to the parts subsequent to the cell as well. Because incoming micro-organisms are killed in the electrolytic cell, formation of a biofilm in the subsequent parts is counteracted. The biofilm is usually formed when micro-organisms adhere to the walls of the water distribution system and feed themselves with nutrients which as such are contained in the water. Experiments have shown that the concentration of adenosine triphosphate (ATP), which is representative for energy production by living cells, may be reduced with at least 85% within a few hours.
5. With the method of this invention an existing biofilm may be physically disintegrated. A lacking biofilm inhibits settling and reproduction of incoming micro-organisms and thus contributes to improved purification. In that situation disinfection of a water flow may be maintained even in the course of and after a period of failing operation. The fact that an existing biofilm was disintegrated when subjected to the present invention could be determined from the observation that the concentration of organic carbon which may be assimilated by micro-organisms (AOC) present in the influent and the immediate effluent after device, were virtually the same. After a while, the AOC concentration of the biofilm decreased, indicating that the biofilm was physically destroyed. Besides that, in the present invention disintegration of an existing biofilm is not limited to the biofilm surface layer, but extended to the deeper regions as well. This effect contributes to inhibiting re-formation of a new biofilm and limits biofilm growth in the region below the surface.
6. Decomposition of the biofilm has been found to proceed in such a way that the risk to increasing the amount of organic carbon which may be assimilated by the micro-organisms (AOC) in the water is virtually absent.
   Thus the biofilm forming capacity of purified water provided by the present invention is not increased. As soon as the AOC of the supplied water is equal to the AOC of the biofilm, the biofilm has been removed and there is a minimum risk to re-infection. The fact that with the present invention the AOC of the water unaffected or affected in such a way only that the ease with which the AOC may be assimilated by micro-organisms is not or insufficiently enhanced, is an advantage over the prior art methods like ozonolyse where an increase of the AOC of the water with a factor five, and chlorination where an increase of a factor two had been observed which promotes biofilm formation.
7. The present invention provides an instantaneous disinfection, regardless of the fluid flow rate, and may suitably used with both cold and hot water.
8. The method of this invention provides a minimum risk to the formation of unwanted trihalomethanes, while a sufficient level of reactive radicals may be generated. It has been found that the concentration of trihalomethanes may be reduced with 60% as compared to prior art methods.
9. Since the reactive radicals are generated in situ from compounds present in the fluid flow as such, since no chloride needs to be supplied, the risk to corrosion is virtually absent.

The invention is now further elucidated in the following experimental description, without however being limited thereto.

### Example 1.

Cultures of gram-negative bacterial strains of Escherichia Coli (LMG 2092) and Legionella pneumophila serogroup 1 (ATCC 33152) were grown overnight in respectively BHI and BCYEα. The cultures were washed three times with Ring-buffer. The concentration of the suspensions was adjusted by measuring the optical density. To determine the bacterial concentration, a decimal dilution series was prepared in Ringer and 100µl of each dilution was incubated in duplo on agar plates. E. Coli was grown on BHI agar and incubated for 24 hours at 28°C, while L. Pneumophila was incubated during 5 days at 37°C on BCYEa. Bacterial populations were counted on their media.

Electrolytic disinfection was carried out using a, disinfection cell with an internal volume of 1 liter, using two identical electrodes. The electrodes had a titanium metal substrate, which was coated with multiple layers of oxides. All layers had the same composition.

To tap water, having the composition given in the table below, each time 10⁴ CFU/ml of each of the above-described micro-organisms was added, at a position downstream the electrolysis unit. As a control, a similar bacterial suspension was added to tap water taken upstream the disinfection unit. The current was set at 0.07A (3.92V), 0.12A (4.93V), 0.11 A (4.81V) to obtain initial concentrations of free oxidants in the range of 0.25 and 0.5 mg/I. The water flow rate was set at 20l/h. After a reaction time of 15 or 45 minutes, the concentration of viable bacteria was determined by agar plate counting. The amount of free oxidants in water was measured before and immediately after addition of the bacterial suspension, and after a reaction time of 15 or 45 minutes.

No living E. Coli could be detected, when applying a current of 0.50 or 0.75 A, which corresponded to a free oxidant concentration of 0.23 mg/I and 0.50 mg/I respectively. Applying currents of 0.30 and 0.50A in the case of Legionella corresponded to a free oxidant concentration of 0.07 and 0.28 mg/I respectively. No culturable Legionella could be detected.

When adding 10⁴ CFU/ml of E. coli downstream the electrolysis unit, no living bacteria could be detected by the end of the reaction time. The concentration of free oxidants before addition of E. coli before the addition ranged from 0.27 to 0.49 mg/I, at the end of the reaction time between 0.08 and 0.33 mg/I.

Also with Legionella the residual effect led to a significant decrease in bacterial concentration, at the above-described free oxidant concentrations. A free oxidant concentration of 0.27 mg/l led to a final concentration of 0.08 mg/I and a 4-fold decrease in Legionella bacteria after 45 minutes of reaction time.

| | |
|---|---|
| pH | 7.3 |
| Cloride | 45 mg/I |
| Sulphate | 71 mg/I |
| Calcium | 136 mg/I |
| Magnesium | 14 mg/I |
| Sodium | 19 mg/I |
| Potassium | 3 mg/I |
| Total hardness | 39.69°f |
| Alkalinity | 316 mg/I |

### Example 2.

### Materials and methods

The EE2 removal by electrolysis, was evaluated using two different electrolysis devices which comprised a disinfection cell (electrolysis cell) and a power supply. The electrolysis cell is made of a coated, permanent TiO2 electrodes.

The first device was operated at currents ranging from 0 to 5.0 A; while the second device was operated at currents ranging from 0 to 2.0 A. A flow controller was used to maintain the residence time of the water in the electrolysis cell at about 30 seconds.

Both devices were fed with the effluent of a membrane bioreactor (MBR) or with EE2 (17α-ethinylestradiol >99% pure, Sigma, Bornem, Belgium) spiked tap water. The MBR effluent stems from a pilot scale membrane bioreactor (Solis Engineering NV, Lelystad, the Netherlands) equipped with Kubota (Kubota Inc., Japan) plate membranes (pore diameter 0.4 µm). This MBR treated hospital wastewater to which 1 mg EE2/L was spiked. This MBR effluent was treated in the electrolytic apparatus. The removal of EE2 at 3.0, 4.0 and 5.0 A was measured. All EE2 concentrations were measured in triplicate.

Four sets of experiments were performed with electrolysis apparatus 1 at a current of 0 - 2 A:
1. Firstly the removal of EE2 in MBR effluent and tap water was determined at 0.5, 1.0, 1.5 and 2.0 A. Two independent test runs were done with MBR effluent which was sampled at several intervals.
2. In a second experiment, the effect of residual oxidizing radicals was investigated by mixing electrolytically treated (current: 1.5 and 2.0 A) MBR effluent with untreated MBR effluent in a 1/5 ratio.
3. In a third experiment, the influence of the addition of NaCI (Sigma, Bornem, Belgium) was evaluated by adding 0, 50, 100 and 200 mg/L NaCI to the water sample.
4. In a fourth experiment, tap water was spiked with EE2 at 10 µg/L (theoretically) in order to evaluate the electrolytical EE2 removal at lower, environmentally more relevant concentrations.

The EE2 extraction protocol was based on Körner et al. (2000). The protocol in this study used C18 extraction cartridges (Varian Bond Elut, 6 mL, 1 g sorbent, Varian Inc., Palo Alto, CA, USA) and acetone, methanol and water as solvents. Cartridges were conditioned with 5 mL of acetone, 10 mL methanol and 5 mL Milli Q water. Afterwards, 5 mL sample water were put on the cartridge and extracted at a flow rate of 10 mL/min. The cartridges were centrifuged 3 times 10 minutes at 250 g in order to dry the extraction cartridge. After every centrifugation, the water was removed from the holding cell. After centrifugation, samples were eluted with 2 times 5 mL of acetone. This extract was transferred subsequently to penicillin flasks and dried under a gentle stream of nitrogen until dryness. These extracts were redissolved in 200 µL dimethylsulphoxide (DMSO, 99% pure, Sigma, Bornem, Belgium), which were transferred quantitatively to HPLC vials containing a 250 µL insert. HPLC analysis was performed with a Dionex HPLC (Sunnyvale, CA, USA) with an autosampler ASI-100, pump series P580, STH585 column oven and UV-VIS detector UVD340S. 50 µL of the sample was injected and eluted over a Genesis C18 column (150 x 4.6 mm, 4 µm) (Jones Chromatography, UK). The temperature was set at 25°C and the flow rate was maintained at 1 mL/min. Solvent A was acetonitrile-acetate (100:0.1v/v, both Sigma, Bornem, Belgium) and solvent B was water-acetate (100:0.1v/v). Elution was as follows: At time 0 the solvent composition was 55% A and 45% B, which was linearly decreased to 38% A after 10 minutes. Afterwards, a linear increase to 55% A was performed until time 15 minutes. An isocratic elution was kept until 20 minutes. UV detection was applied at 205 nm.

In order to evaluate the extraction efficiency, MBR effluent and drinking were spiked with EE2 at a concentration of 1, 5 (only drinking water), 8, 20, 50, 100, 200, 500, 1000 and 2000 µg/L (data not shown). The HPLC signal correlated to the EE2 spiked MBR effluent and drinking water (R² = 0.95 for both).

Chemical Oxygen Demand (COD) was measured according to Standard Operating Procedures (SOP) (Greenberg et al., 1992). Total coliforms, total aerobes and total anaerobes were measured according to SOP (Greenberg et al., 1992). The measurement of CI- in the MBR effluent was performed by means of anion chromatography (Dionex, Sunnyvale, CA, USA). Total and FC concentrations were measured colorimetrically with the N,N-diethyl-p-phenylenediamine (DPD) method with a handheld photometer (Lovibond Inc., Germany) according to the manufacturer's instructions.

### Electrolysis with first device (0 - 2 A)

Increasing free chloride concentrations (FC) are generated at increasing currents. As such the FC is representative for the extent of total radical formation. The removal efficiency of EE2 increased with increasing current and FC, with a maximum removal efficiency of 77 ± 15 % (Table 1). The removal of EE2 in drinking water was higher than the EE2 removal in MBR effluent at comparable currents and FC (Table 1). No significant difference was found between the different treatments and all removal efficiencies were in the order of 85 ± 5 %.

A 5-fold dilution of treated MBR effluent with untreated MBR effluent was done to evaluate the removal by residual oxidising agents. The EE2 removal decreased from 77 ± 13 % and 73 ± 13 % at 1.5 and 2.0 A respectively, to 39 ± 12 % and 35 ± 11 % respectively. This removal efficiency is 20 to 24% higher than can be expected from the dilution effects of the mixing of 1 part treated water with 4 parts untreated water.

The effect of electrolyte addition and current increase is more pronounced in MBR effluent than in drinking water (Table 2). The FC concentrations measured in MBR effluent are roughly a factor 5 to 10 lower than those measured in drinking water, at conductivities which are roughly 2 to 3 times higher in MBR effluent.

Drinking water was spiked with EE2 at an initial concentration of 14.4 ± 0.4 µg EE2/L in order to evaluate the EE2 removal at lower concentrations. The EE2 concentrations after electrolysis were 2.0 ± 0.5 µg EE2/L (FC: 0.68 mg/L), 2.3 ± 0.4 µg EE2/L (FC: 1.27 mg/L), 2.0 ± 0.2 µg EE2/L (FC: 1.68 mg/L) and 2.6 ± 0.2 µg EE2/L (FC: 1.99 mg/L) at currents of 0.5, 1.0, 1.5 and 2.0 A respectively. These values corresponded to removal efficiencies of 86 ± 20%, 84 ± 13%, 86 ± 7% and 82 ± 5% respectively.

Device 1 removed bacteria in MBR effluent very well (Table 1). Total coliforms, total aerobes and total anaerobes decreased in the MBR effluent for 0.8 - >3.4, 0.7 - 2.2 and 0.6 - 2.1 log units respectively, with higher removal efficiencies at higher currents and free chloride concentrations (FC). The initial bacterial counts for total coliforms, total aerobes and total anaerobes in MBR effluent were 4.4 ± 0.2, 4.5 ± 0.2 and 3.2 ± 0.2 log colony forming units (CFU)/mL respectively. The device did not remove Chemical Oxygen Demand (COD) significantly.

### Electrolysis with second device 2 (0 - 5 A)

MBR effluent was treated at higher currents to evaluate if the EE2 removal efficiency would be higher than at lower currents. The initial EE2 concentration dropped from 1634 ± 178 µg EE2/L to 44 ± 5 µg EE2/L (FC: 1.14 mg/L), 37 ± 3 µg EE2/L (FC: 1.65 mg/L) and 23 ± 3 µg EE2/L (FC: 1.87mg/L) respectively at currents of 3.0, 4.0 and 5.0 A respectively. This corresponds to removal efficiencies of 97 ± 1 %, 98 ± 1 % and 99 ± 1 % respectively. The EE2 concentrations of the MBR effluent treated at 3.0 A and 4.0 A are significantly different from the one at 5.0 A, but there is no significant difference between the EE2 removal of these treatments (p= 0.13). The EE2 concentration decreased to 15.8 ± 0.9 µg EE2/L (FC: 4.50 mg/L) after two passages through the electrolysis cell at 5.0 A. This corresponds to a removal efficiency of 99 ± 1 %.

From these experiments it appears that high removal efficiencies of the estrogen could be obtained using electrolytical EE2 removal from MBR effluent and drinking water. Since no other peaks emerged in the chromatograms of the electrolyzed MBR effluents and drinking waters, it appears that EE2 is transformed into compounds which cannot be extracted with the given protocol. Although not anticipated, it appears that the degradation mechanism involves an attack of the phenolic ring of EE2 by oxidizing agents. A mixture of mainly OH, CI and OCI radicals are formed depending on the type of water.

Even though CI radicals are formed, radical reaction kinetics show that during electrolysis according to the method of the invention, using the ecodis®, the reaction with OH radicals will prevail. As a consequence there is a minimum risk to the formation of chlorinated estrogens.

EE2 removal in drinking water is higher at lower electrolyte concentrations and currents (Table 2). This effect is smaller in the MBR effluent. To minimise the risk to salting of the water, a higher current is to be preferred to addition of extra chemicals/salts. Maximum EE2 removal 97.7 ± 0.4% is already reached without electrolyte addition in drinking water at higher currents.

The experiments have been conducted at high concentrations when compared to environmental concentrations (mg/L vs. lower ng/L). Yet the EE2 removal in drinking water was compared at 1 mg/L and 10 µg/L. No significant differences could be noticed between the removal efficiencies at those different concentrations (~85% removal). This offers opportunities for applications at lower environmentally relevant concentrations (tens of ng EE2/L).

**Table 1: Removal of bacteria, EE2 and COD in MBR effluent and drinking water in electrolysis apparatus 1.**

| Experiment | MBR effluent | Input | Output | | | |
|---|---|---|---|---|---|---|
| | | | 0.5 A | 1.0 A | 1.5 A | 2.0 A |
| 1 | Total anaerobes (log CFU/mL) | 3.25 ± 0.25 | 2.66 ± 0.05 | 1.71 ± 0.12 | 0.61 ± 0.15 | 0.15 ± 0.21 |
| | Total aerobes (log CFU/mL) | 4.54 ± 0.21 | 3.90 ± 0.08 | 3.80 ± 0.12 | 2.56 ± 0.08 | 2.32 ± 0.03 |
| | Total coliforms (log CFU/mL) | 4.39 ± 0.22 | 3.65 ± 0.08 | 3.41 ± 0.08 | < 1 | <1 |
| | COD (mg/L) | 60 | 57 | 62 | 55 | 60 |
| | FC (mg/L) | <LOD* | 0.16 | 0.4 | 0.53 | 0.8 |
| 2 | EE2^{†} (µg/L) EE2^{†} (µg/L) | 766 ± 78 | 404 ± 38 | 198 ± 17 | 180 ± 29 | 205 ± 13 |
| | FC (mg/L) | <LOD* | 0.63 | 1.06 | 2.60 | 2.37 |
| 3 | EE2^{†} (µg/L) | 765 ± 76 | 607 ± 105 | 469 ± 10 | 388 ± 45 | 253 ± 21 |
| | FC (mg/L) | <LOD* | 0.18 | 0.36 | 0.78 | 1.19 |

| | *Drinking water* | *Input* | *Output* | | | |
|---|---|---|---|---|---|---|
| | | | 0.5 A | 1.0 A | 1.5 A | 2.0 A |
| 4 | EE2(µg/L) | 1497 ±53 | 237 ± 11 | 227 ± 5 | 190 ± 13 | 204 ± 23 |
| | FC (mg/L) | <LOD | 0.67 | 1.23 | 1.79 | 2.15 |

| | | | | | | |
|---|---|---|---|---|---|---|
| *: Limit of detection for free chloride measurement was 0.06 mg/L | | | | | | |
| ^{†}: Two independent test runs with different MBR effluent batches | | | | | | |
| CFU= colony forming units | | | | | | |

**Table 2: Effect of NaCi addition on EE2 removal in MBR effluent (initial Cl⁻ concentration: 262 mg/L - applied current: 0 - 2 A) and drinking water (applied current: 0 - 2 A) treated with electrolysis apparatus 1**

| | | MBR effluent | | | | Spiked drinking water | | | |
|---|---|---|---|---|---|---|---|---|---|
| Current (A) | NaCl added (mg/L) | Conductivity (µS) | Free chloride concentration concentration (mg/L) | EE2 concentration (µg/L) (n=3) | EE2 removal (%) (n=3) | Conductivity (µS) | Free chloride concentration concentration (mg/L) | EE2 concentration concentration (µg/L) (n=3) | EE2 removal (%) (n=3) |
| 0.0 | 0 | 1668 | <LOD | 1029 ± 124 | | 694 | <LOD | 1239 ±27 | |
| 0.5 | 0 | 1642 | 0.05 | 924 ± 110 | 10 ± 2 | 694 | 0.44 | 323 ± 25 | 74 ± 6 |
| 1.0 | 0 | 1660 | 0.37 | 636 ± 9 | 38 ± 5 | 699 | 0.85 | 77 ± 15 | 94 ± 19 |
| 1.5 | 0 | 1654 | 0.40 | 376 ± 50 | 64 ± 11 | 705 | 1.49 | 44 ± 18 | 96 ± 39 |
| 2.0 | 0 | 1662 | 0.65 | 210 ± 52 | 80 ± 22 | 708 | 2.12 | 32 ± 7 | 97 ± 21 |
| 0.0 | 50 | 1758 | <LOD | 1036 ±23 | | 785 | <LOD | 1259 ±95 | |
| 0.5 | 50 | 1756 | 0.06 | 823 ± 16 | 21 ± 1 | 783 | 0.59 | 143 ± 4 | 89 ± 2 |
| 1.0 | 50 | 1758 | 0.20 | 579 ± 7 | 44 ± 1 | 786 | 1.5 | 44 ± 5 | 97 ± 12 |
| 1.5 | 50 | 1751 | 0.25 | 305 ±45 | 71 ±10 | 789 | 2.29 | 33 ± 5 | 97 ± 14 |
| 2.0 | 50 | 1753 | 0.46 | 170 ±47 | 84 ±23 | 791 | 4.99 | 48 ± 7 | 96 ± 14 |
| 0.0 | 100 | 1861 | <LOD | 990 ±68 | | 860 | <LOD | 1200 ± 110 | |
| 0.5 | 100 | 1853 | 0.07 | 789 ± 104 | 20 ± 3 | 864 | 1.04 | 38 ± 3 | 97 ± 7 |
| 1.0 | 100 | 1853 | 0.22 | 460 ± 61 | 54 ± 8 | 864 | 2.09 | 21 ± 1 | 98 ± 6 |
| 1.5 | 100 | 1846 | 0.37 | 259 ± 30 | 74 ± 10 | 860 | 2.81 | 24 ± 3 | 98 ± 10 |
| 2.0 | 100 | 1856 | 0.50 | 145 ±17 | 85 ± 11 | 868 | 2.48 | 26 ± 5 | 98 ± 20 |
| 0.0 | 200 | 2030 | <LOD | 890 ±12 | | 987 | <LOD | 1142 ±160 | |
| 0.5 | 200 | 2030 | 0.08 | 704 ±57 | 20 ± 2 | 998 | 1.2 | 23 ± 8 | 98 ±33 |
| 1.0 | 200 | 2030 | 0.23 | 260±35 | 71 ±10 | 1001 | 2.15 | 31 ± 9 | 97±30 |
| 1.5 | 200 | 2030 | 0.36 | 45 ± 6 | 95 ±12 | 996 | 3.37 | 33 ±17 | 97 ±49 |
| 2.0 | 200 | 2030 | 0.89 | 40 ± 9 | 96 ±21 | 1000 | 3.85 | 29 ± 8 | 97 ±27 |

| | | | | | | | | | |
|---|---|---|---|---|---|---|---|---|---|
| <LOD: below limit of detection (< 0.06 mg/L) | | | | | | | | | |

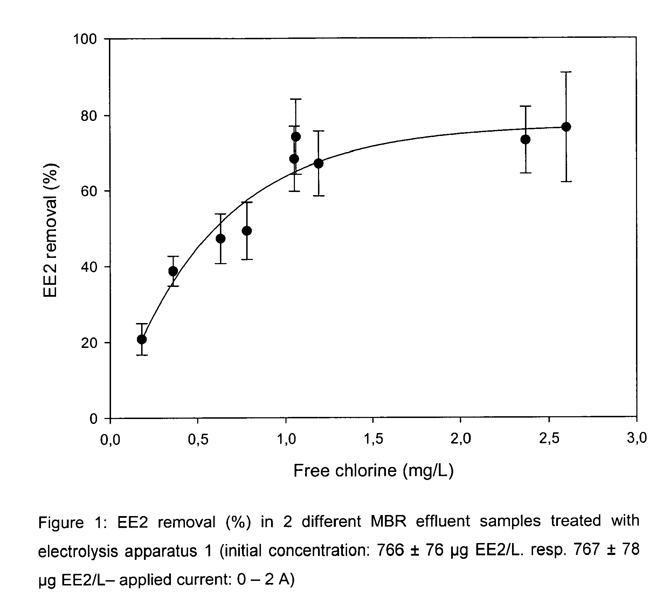

## Claims

1. A method for removing pollutants form at least one water based fluid, **characterized in that** the water based fluid contains an amount of at least one chloride mineral and is subjected to an electrolysis in the presence of an anode and a cathode, at an effective current level with the purpose of generating from the water and/or the chloride mineral compounds containing at least one oxygen and/or chlorine radical, which are capable of reacting with the pollutant and of decomposing the pollutant to give purified water based fluid, wherein the anode and cathode comprise at least one metal which is at least partly coated with at least one layer containing at least one metal oxide.

2. A method as claimed in claim 1, **characterised in that** as the electrode use is made of an electrode having a substrate of at least one precious metal, which is coated with at least one layer containing at least one precious metal oxide.

3. A method as claimed in claim 2, **characterised in that** the substrate is made of metallic titanium.

4. A method as claimed in any one of claims 1-3, **characterised in that** the at least one precious metal oxide is selected from the group of Ti, PT, Pd, Ir, Ru and Ta or mixtures of two or more of those.

5. A method as claimed in any one of claims 1-4, **characterised in that** subsequent metal oxide layers have a composition which is virtually the same.

6. A method as claimed in any one of claims 1-5, **characterised in that** the at least one metal oxide layer is porous.

7. A method as claimed in any one of claims 1-6, **characterised in that** as the chloride mineral use is made of a chloride of sodium, potassium, magnesium, iron or a mixture of two or more of those.

8. A method as claimed in any one of claims 1-7, **characterised in that** an amount of a chloride mineral is supplied to the fluid to be treated.

9. A method as claimed in any one of claims 1-6, **characterised in that** the chloride concentration in the water based fluid subjected to electrolysis is less than 2 mg/I, preferably less than 1 mg/I.

10. A method as claimed in any one of claims 1-9, **characterised in that** the pH of the fluid is maintained between 6 and 9, preferably between 6.5 and 8.5.

11. A method as claimed in any one of claims 1-10, **characterised in that** the anode and cathode are coupled to a direct current source.

12. A method as claimed in any one of claims 1-11, **characterised in that** the polarisation of the electrodes is inversed at regular time intervals.

13. A method as claimed in claim 11 or 12, **characterised in that** use is made of a switched power supply,

14. A method as claimed in any one of claims 1-13, **characterised in that** the water based fluid is water.

15. A method as claimed in any one of claims 1-14, **characterised in that** as the water based fluid to be purified use is made of water which has been subjected to water purification treatment and which contains chloride minerals.

16. A method as claimed in any one of claims 1-15, **characterised in that** the method is operated in a continuous manner.

17. A method as claimed in any one of claims 1-15, **characterised in that** the method is operated batch wise.

18. A method as claimed in any one of claims 1-16, **characterised in that** the purified water based fluid is mixed with a flow of non-purified water.

19. Use of the method of any one of claims 1-18 for removing from water one or more micro-organisms of the group of Bacillus fubeilis, Bacillus cereus, Pneumonas Aeroginosa, Staphylococcus Aureus Escherichia Coli, Ralstonia Solanasearum, Trichoderma Hamatum, Salmonella species spp, Campylobacter Jejuni, Pseudomonas fluorescens, Pantoea agglomeans Tahnella aquatilis or mixtures of two or more of those.

20. A device for removing organic pollutants form at least one water based fluid, **characterized in that** the device comprises a reactor with
- an inlet for an amount of water based fluid to be treated,
- at least one anode and cathode comprising at least one precious metal substrate which is coated with at least one layer containing at least one metal oxide,
- a current source for supplying to the said anode and cathode an effective current level with the purpose of generating in the fluid compounds containing oxygen and/or chlorine radicals which are reactive with the pollutants and micro-organisms present, and
- an outlet for withdrawing the purified fluid from the reactor after it has been subjected to electrolysis.

21. A device as claimed in claim 20, **characterised in that** the device comprises a main flow for supplying the water based fluid, which main flow comprises a first connection to a bypass for supplying part of the main flow to the bypass, **in that** the reactor is mounted to the bypass and is adapted to subject the fluid flow from the bypass to electrolysis, **in that** the bypass comprises a second connection to the main flow permitting the treated bypass flow to be supplied to non the treated main flow.
